# EUROPEAN PATENT SPECIFICATION

(11) **EP 2 941 463 B1**
(45) Date of publication and mention of the grant of the patent: **08.08.2018**
(21) Application number: 14713976.0
(22) Date of filing: 03.03.2014
(51) Int. Cl.: C09J 7/38, B32B 7/12

(54) **MULTILAYER PRESSURE SENSITIVE ADHESIVE**
MEHRSCHICHTIGES DRUCKEMPFINDLICHES HAFTMITTEL
ADHÉSIF AUTOCOLLANT MULTICOUCHE

(30) Priority: 04.03.2013 US 201361772202 P
(43) Date of publication of application: 11.11.2015
(73) Proprietor: Rohm and Haas Company, Philadelphia, PA 19106 (US)
(72) Inventor: GRIFFITH, William B., North Wales, PA 19454 (US); LANE, Melissa, Philadelphia, PA 19106-2399 (US)
(74) Representative: Houghton, Mark Phillip
(86) International application number: PCT/US2014/019828
(87) International publication number: WO 2014/137875

(56) References cited:
- EP-A2- 0 951 948
- EP-A2- 1 719 808
- WO-A1-00/17285
- JP-A- S63 215 787

## Description

Pressure sensitive adhesives (PSAs) that contain acrylic polymers have many desirable characteristics. For example, they generally have better resistance to chemical reagents and UV light than PSAs made from many other materials. It is often desired to provide a PSA that bonds well to polyolefin substrates. It is also desired to provide PSAs that use less tackifier than had been used in previously used PSAs. There is a need for PSAs that contain acrylic polymer, that show good adhesion to polyolefin substrates, and that have a relatively low amount of tackifier.

US 6,183,862 teaches a multilayer PSA that contains a facestock, a first adhesive layer, and a PSA layer. In the PSA taught by US 6,183,862, both the first adhesive layer and the PSA layer contain tackifier.

JP S63 215787 A discloses pressure sensitive adhesive polymer compositions that contain tackifying hydrocarbon resins and acrylic polymers, and the compositions are said to provide excellent tack to adherends that consist mainly of non-polar polyolefins.

The following is a statement of the invention.

A first aspect of the present invention is a pressure sensitive adhesive article comprising
(a) a substrate (Sa),
(b) in contact with said substrate (Sa), a layer (Lb) of a tackifier-free composition (Cb) that comprises one or more acrylic polymer (POLb) having Tg determined according to the method described herein of -10°C or lower, said composition (Cb) being tackifier-free as the amount of all tackifiers in the composition is either zero or is less than 10% by weight based on the dry weight of the composition; and
(c) in contact with said layer (Lb), a layer (Lc) of a tackifier-containing composition (Cc) that comprises one or more tackifier and one or more hydrocarbon polymer (POLc) having Tg determined according to the method described herein of -10°C;
wherein said acrylic polymer ((POLb) is a latex of particles of polymer formed by emulsion polymerization;
said acrylic polymer (POLb) has weight-average molecular weight of 50,000 or higher;
and the amount of said tackifier in said article is 12% or less by weight, based on the sum of the weight of said composition (Cb) and said composition(Cc).

A second aspect of the present invention is a bonded article made by a process comprising contacting a substrate (Sd) with the article of the first aspect, wherein said substrate (Sd) is in contact with said layer (Lc).

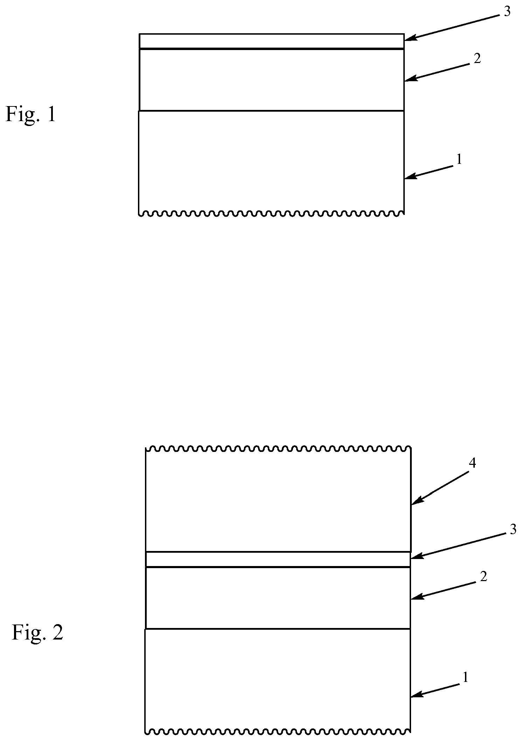

Fig. 1 is a vertical cross section of a pressure sensitive adhesive article of the present invention showing substrate (Sa) (**1**); layer (Lb) (**2**) of a tackifier-free composition (Cb), which contains one or more acrylic polymer (POLb) having Tg of -10°C or lower; and layer (Lc) (**3**) of a tackifier-containing composition (Cc), which contains one or more tackifier and one or more hydrocarbon polymer (POLc) having Tg of -10°C or lower. Fig. 1 is not drawn to scale in any sense. For example, the size of the pressure sensitive adhesive article of the present invention in the horizontal direction shown in Fig. 1 may be larger by a factor of 1,000 or more than the size in the vertical direction shown in Fig. 1.

Fig. 2 (also not drawn to scale) depicts a preferred use to which the pressure sensitive adhesive article of the present invention may be put. Fig. 2 shows layer (Lc) (**3**) in contact with an additional substrate (Sd) (**4**).

The following is a detailed description of the invention.

As used herein, the following terms have the designated definitions, unless the context clearly indicates otherwise.

When a ratio is said herein to be X:1 or greater, it is meant that the ratio is Y:1, where Y is greater than or equal to X. For example, if a ratio is said to be 3:1 or greater, that ratio may be 3:1 or 5:1 or 100:1 but may not be 2:1. Similarly, when ratio is said herein to be W:1 or less, it is meant that the ratio is Z:1, where Z is less than or equal to W. For example, if a ratio is said to be 15:1 or less, that ratio may be 15:1 or 10:1 or 0.1:1 but may not be 20:1.

As used herein, Dynamic Mechanical Analysis (DMA) refers to measurements made in shear geometry in the linear viscoelastic range at frequency of 1 sec⁻¹. DMA measures the elastic modulus (G'), the loss modulus (G"), and tandelta (the quotient found by dividing G" by G', synonymously called "tan(δ)"). A curve showing tandelta as a function of temperature is known herein as a "tandelta curve." Elastic modulus is reported herein in units of kilopascals (kPa).

The glass transition temperature (Tg) of a material is determined by differential scanning calorimetry using the midpoint method and temperature scan rate of 10°C per minute according to test method ASTM D7426-08 (American Society of Testing and Materials, Conshohocken, PA, USA).

A "polymer," as used herein is a relatively large molecule made up of the reaction products of smaller chemical repeat units. Polymers may have structures that are linear, branched, star shaped, looped, hyperbranched, crosslinked, or a combination thereof; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof.

Polymer molecular weights can be measured by standard methods such as, for example, size exclusion chromatography (SEC, also called gel permeation chromatography or GPC). Polymers have weight-average molecular weight (Mw) of 1000 or more. Polymers may have extremely high Mw; some polymers have Mw above 1,000,000; typical polymers have Mw of 1,000,000 or less. Some polymers are crosslinked, and crosslinked polymers are considered to have infinite Mn.

As used herein "weight of polymer" means the dry weight of polymer.

Molecules that can react with each other to form the repeat units of a polymer are known herein as "monomers." The repeat units so formed are known herein as "polymerized units" of the monomer.

Vinyl monomers have the structure 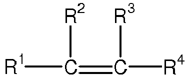 where each of R¹, R², R³, and R⁴ is, independently, a hydrogen, a halogen, an aliphatic group (such as, for example, an alkyl group), a substituted aliphatic group, an aryl group, a substituted aryl group, another substituted or unsubstituted organic group, or any combination thereof.

Some suitable vinyl monomers include, for example, styrene, substituted styrenes, dienes, ethylene, other alkenes, dienes, ethylene derivatives, and mixtures thereof. Ethylene derivatives include, for example, unsubstituted or substituted versions of the following: ethenyl esters of substituted or unsubstituted alkanoic acids (including, for example, vinyl acetate and vinyl neodecanoate), acrylonitrile, (meth)acrylic acids, (meth)acrylates, (meth)acrylamides, vinyl chloride, halogenated alkenes, and mixtures thereof. As used herein, "(meth)acrylic" means acrylic or methacrylic; "(meth)acrylate" means acrylate or methacrylate; and "(meth)acrylamide" means acrylamide or methacrylamide. "Substituted" means having at least one attached chemical group such as, for example, alkyl group, alkenyl group, vinyl group, hydroxyl group, carboxylic acid group, other functional groups, and combinations thereof. In some embodiments, substituted monomers include, for example, monomers with more than one carbon-carbon double bond, monomers with hydroxyl groups, monomers with other functional groups, and monomers with combinations of functional groups. (Meth)acrylates are substituted and unsubstituted esters or amides of (meth)acrylic acid.

As used herein, acrylic monomers are monomers selected from (meth)acrylic acid, alkyl esters of (meth)acrylic acid, alkyl esters of (meth)acrylic acid having one or more substituent on the alkyl group, (meth)acrylamide, N-substituted (meth)acrylamide, and mixtures thereof. As used herein, vinylaromatic monomers are monomers selected from styrene, alpha-alkyl styrenes, and mixtures thereof.

As used herein, an "acrylic " polymer is a polymer in which 30% or more of the polymerized units are selected from acrylic monomers and also in which 75% or more of the polymerized units are selected from the group consisting of acrylic monomers and vinylaromatic monomers. The percentages are by weight based on the weight of the polymer.

As used herein , an olefin polymer is a polymer in which 70% or more of the polymerized monomer units are selected from hydrocarbon alkenes, hydrocarbon dienes, and mixtures thereof, by weight based on the weight of the polymer.

As used herein, a hydrocarbon polymer is a polymer in which all of the atoms are either hydrogen or carbon.

A tackifier is an organic compound having molecular weight of 500 to 10,000 and having glass transition temperature of 0°C or higher.

The compatiblity of a tackifier with a polymer is assessed according to the following test. First, the polymer is tested by DMA over the temperature range of -50°C to 110°C; the tandelta curve is recorded, and the number of peaks in that curve is noted. Also, a blend is made of the tackifier and the polymer having ratio of T% tackifier and P% polymer by weight (where T% plus P% is 100%), and the blend is subjected to DMA over the same temperature range, and the tandelta curve of the blend is observed. If the polymer and the tackifier are compatible at that ratio, the blend will appear visually to be homogeneous, and the number of peaks in the tandelta curve of the blend is the same as the number of peaks in the tandelta curve of the polymer alone, though one or more of the peaks from the polymer-alone tandelta curve may be shifted to a different temperature in the tandelta curve of the blend. If the polymer and the tackifier are incompatible at that ratio, either the blend will appear inhomogeneous, with apparent phase separation, or the tandelta curve of the blend will show at least one more peak than the number of peaks shown in the tandelta curve of the polymer alone, or both. The lowest value of T% for which the blend is incompatible is known herein as the "compatibility limit" of that tackifier in that polymer. When the compatibility limit is 20% or higher, the tackifier is said herein to be compatible with the polymer.

A Pressure Sensitive Adhesive (PSA) is an adhesive that forms a bond with a substrate when pressure is applied to bring the adhesive and the substrate into contact. The bond forms without addition of further materials or the application of heat. As used herein, a pressure sensitive adhesive article is an article in which a pressure sensitive adhesive is adhered to a first substrate and in which a surface of the PSA (the "available surface") is available to make contact with a second substrate. The available surface of the PSA may or may not be in contact with a release material. A release material is a material that forms a weak bond with the PSA and may be easily removed so that the available surface is exposed.

A composition is considered herein to be tackifier-free if the amount of all tackifiers in the composition is either zero or is less than 10% by weight based on the dry weight of the composition. A composition herein is considered to contain tackifier (or synonymously to be "tackifier-containing") if the amount of tackifier in the composition is 10% or more by weight based on the dry weight of the composition.

A composition is herein considered to be "aqueous" if the composition contains water in the amount of 25% or more by weight based on the weight of the composition.

The present invention involves the use of a substrate, herein labeled substrate (Sa). The substrate (Sa) may be any material. Preferred are paper, polymer film, and metal foil. Among polymer films, preferred are polyester, polyvinyl chloride, polyethylene, and polypropylene films. Among polymer films, preferred are those in which at least one side has been treated by corona discharge.

In contact with substrate (Sa) is a layer of a tackifier-free composition, herein referred to as composition (Cb). Composition (Cb) contains one or more polymer, herein referred to as polymer (POLb). Polymer (POLb) has Tg of -10°C or lower; preferably -20°C or lower; more preferably -30°C or lower. Preferably polymer (POLb) has Tg of -100°C or higher.

The amount of tackifier in composition (Cb) is, by weight based on the dry weight of composition (Cb), less than 10%; preferably 3% or less; more preferably 1% or less; more preferably zero.

Polymer (POLb) is an acrylic polymer. Preferably, the amount of polymerized units of acrylic monomers in polymer (POLb) is, by weight based on the weight of polymer (b), 50% or more; more preferably 70% or more; more preferably 90% or more; more preferably 99% or more. Polymer (POLb) has Mw of 50,000 or higher.

Preferably, polymer (POLb) contains polymerized units of one or more of n-butyl acrylate (n-BA), ethyl acrylate (EA), isooctyl acrylate (i-OA), or a mixture thereof. As used herein, "isooctyl" is an unsubstituted alkyl group that contains exactly 8 carbon atoms in a branched configuration. The term "isooctyl" includes all branched isomers of 8-carbon alkyl groups and all mixtures of such isomers, including, for example, the 2-ethylhexyl group, dimethyl-hexyl groups, methyl-heptyl groups, trimethyl-pentyl, and mixtures thereof. Preferably, the sum of the amounts of polymerized units of n-BA, polymerized units of EA, and polymerized units of i-OA in polymer (POLb), by weight based on the weight of polymer (POLb), is 50% or more; more preferably 75% or more; more preferably 90% or more.

Preferably, every polymer in composition (Cb) that has Mw of 10,000 or higher is an acrylic polymer.

Preferably, the amount of all tackifiers in composition (Cb), by weight based on the dry weight of composition (Cb), is 5% or less; more preferably 1% or less; more preferably zero.

Preferably, the amount of polymer (POLb) in composition (Cb), by weight based on the dry weight of composition (Cb), is 80% or more; more preferably 90% or more; more preferably 95% or more.

Preferably, composition (Cb) forms a continuous layer (Lb) on a face of substrate (Sa). Preferably, the thickness of the layer of composition (Cb) is 7.5 micrometer or more. Preferably, the thickness of the layer of composition (Cb) is75 micrometer or less; more preferably 55 micrometer or less; more preferably 40 micrometer or less.

Preferably, composition (Cb) has the properties of a PSA. Preferably, composition (Cb) has elastic modulus of 20 kPa or higher over a temperature range that includes the range of 10°C to 40°C. Preferably, composition (Cb) has elastic modulus over a temperature range that includes the range of 10°C to 40°C of 1,000 kPa or lower; more preferably 500 kPa or lower.

A layer of composition (Cc) is in contact with the layer (Lb) of composition (Cb). Composition (Cc) contains one or more polymer (POLc). Polymer (POLc) is a hydrocarbon polymer.

Preferably, polymer (POLc) is selected from block polymers, statistical copolymers, and homopolymers, or mixtures thereof. Among homopolymers and statistical copolymers, preferred are styrene/butadiene copolymers, natural rubber, olefin polymers, and mixtures thereof.

Among embodiments in which polymer (POLc) is a homopolymer or statistical copolymer, preferably polymer (POLc) has Tg of -10°C or lower; more preferably -20°C or lower; more preferably -30°C or lower. Preferably polymer (POLc) has Tg of -100°C or higher.

Among embodiments in which polymer (POLc) is a block polymer, polymer (POLc) may have two blocks, three blocks, or more than three blocks. Preferred are triblock polymers, which are block polymers having exactly three blocks. Preferred triblock polymers have a block of polymerized units of styrene at each end and a middle block in between. Preferred middle blocks contain polymerized units of butadiene, isoprene, ethylene, propylene, butylene, or a mixture thereof; more preferred middle blocs contain polymerized units of isoprene.

When polymer (POLc) is a block polymer, it is expected that polymer (POLc) will exhibit more than one Tg. Preferably, at least one Tg is -10°C or lower; more preferably -20°C or lower; more preferably -30°C or lower.

Composition (Cc) contains one or more tackifier. Preferred tackifiers are rosin resins, derivatives of rosin resins, hydrocarbon resins, hydrogenated hydrocarbon resins, terpene resins, and derivatives of terpene resins. Preferably, composition (Cc) contains at least one tackifier that is compatible with at least one polymer (POLc). More preferably, every tackifier in composition (Cc) is compatible with every polymer (POLc). Preferred tackifiers are hydrocarbon resins and hydrogenated hydrocarbon resins; more prefered are hydrocarbon resins.

Preferred are tackifiers having Mw of 5,000 or less. Preferred are tackifiers having Mw or 500 or more; more preferably 1,000 or more.

Preferably, the amount of tackifier in composition (Cc) is 5% or more by weight based on the dry weight of composition (Cc); more preferably 10% or more.

When polymer (POLc) is a block polymer, the preferred amount of tackifier is, by weight based on the weight of composition (Cc), 40% to 65%. When polymer (POLc) is a styrene/butadiene copolymer, the preferred amount of tackifier is, by weight based on the weight of composition (Cc), 5% to 50%, more preferably 10% to 50%. When polymer (POLc) is natural rubber, the preferred amount of tackifier is, by weight based on the weight of composition (Cc), 40% to 65%. When polymer (POLc) is a polyolefin, the preferred amount of tackifier is, by weight based on the weight of composition (Cc), 40% to 70%.

Preferably, composition (Cc) has the properties of a PSA. Preferably, composition (Cc) has elastic modulus of 20 kPa or higher over a temperature range that includes the range of 10°C to 40°C. Preferably, composition (Cc) has elastic modulus over a temperature range that includes the range of 10°C to 40°C of 1,000 kPa or lower; more preferably 500 kPa or lower.

Preferably, the thickness of the layer of composition (Cc) is 1.25 micrometer or more. Preferably, the thickness of the layer of composition (Cc) is 25 micrometer or less; more preferably 10 micrometer or less; more preferably 5 micrometer or less.

Preferably, the sum of the amount of polymer (POLc) in composition (Cc) plus the amount of tackifier in composition (Cc) is, by weight based on the dry weight of composition (Cc), 80% or more; more preferably 90% or more; more preferably 95% or more.

Preferably, the amount of tackifier is, by weight based on the sum of the weights of composition (Cb) and composition (Cc), 0.5% or more; more preferably 1% or more; more preferably 2% or more. The amount of tackifier is, by weight based on the sum of the weights of composition (Cb) and composition (Cc), 12% or less; preferably 9% or less; more preferably 8% or less.

Either composition (Cb) or composition (Cc) may independently of each other contain one or more additional ingredients. Preferably such additional ingredients are chosen to improve the performance of the PSA article. Typical additional ingredients include plasticizers, fillers, thickeners, pigments, antioxidants, UV stabilizers, defoamers, surfactants, and mixtures thereof.

Preferably, the pressure sensitive adhesive article of the present invention has good resistance to migration the tackifier that is present in composition (Cc). It is useful to consider parameter "T-Compat-b", which is the compatibility limit of the tackifier in the specific polymer (POLb) in which the tackifier has the highest compatibility limit. It is also useful to consider the parameter "T-Compat-c," which is the compatibility limit of the tackifier in the specific polymer (POLc) in which the tackifier has the lowest compatibility limit. Preferably, T-Compat-b is lower than T-Compat-c. Preferably, the tackifier is incompatible in every polymer (POLb).

Preferably, the weight ratio of composition (Cb) to composition (Cc) is 1.01:1 or greater; more preferably 2:1 or greater; more preferably 4:1 or greater; more preferably 6:1 or greater. Preferably, the weight ratio of composition (Cb) to composition (Cc) is 20:1 or less; more preferably 15:1 or less; more preferably 10:1 or less.

The layer of composition (Cb) may be applied to substrate (Sa) by any method. Composition (Cb1) is formed by aqueous emulsion polymerization to form a latex of particles of polymer (POLb). Preferably, the median particle size of the particles of polymer (POLb) is from 50 nm to 750 nm. Preferably, the amount of water in the continuous medium, by weight based on the weight of the continuous medium, is 75% or more; more preferably 90% or more.

One or more optional additional ingredients may be added to aqueous composition (Cb1). A layer of aqueous composition (b1) may be applied to substrate (a) by any method. Preferred methods are slide coating, curtain coating, and slot die coating.

After a layer (Lbl) of aqueous composition (Cbl) is applied to substrate (Sa), the layer of aqueous composition (Cbl) may be dried or allowed to dry. That is, the water may be removed from the layer of aqueous composition (b1) to form a dry coating. Water is preferably removed by the application of heat or moving air or both.

The layer (Lc) of composition (Cc) may be applied to the layer of composition (Cb) by any method. Preferably, an aqueous composition (Cc1) is formed that contains tackifier and contains particles of polymer (POLc) dispersed in an aqueous medium. Preferably, the median particle size of the particles of polymer (POLc) is from 50 nm to 1200 nm. Preferably, the amount of water in the continuous medium, by weight based on the weight of the continuous medium, is 75% or more; more preferably 90% or more. One or more optional additional ingredients may be added to aqueous composition (Cc1).

A layer (Lc1) of aqueous composition (Cc1) may be applied to the layer of composition (Cb) by any method. Preferred methods are slide coating, curtain coating, and slot die coating. A layer of aqueous composition (Cc1) may either be applied to a wet layer of aqueous composition (Cbl) or applied to a dry layer of composition (Cb).

In some embodiments, after a layer (Lbl) of aqueous composition (Cbl) is applied to substrate (Sa) and dried, then a layer (Lc1) of aqueous composition (Cc1) is applied to the dry layer of composition (Cb), and then the layer (Lc1) of aqueous composition (Cc1) is dried.

In some embodiments, a layer (Lbl) of aqueous composition (Cbl) is applied to substrate (Sa) and, while the layer (Lbl) of aqueous composition (Cbl) is still wet, a layer (Lc1) of aqueous composition (Cc1) is applied on top of the layer (Lb1) of aqueous composition (Cb1), and then the entire ensemble is then dried. Among such embodiments, it is preferred that a multilayer coating device is used that simultaneously applies a layer (Lb1) of aqueous composition (Cb1) to substrate (Sa) and also applies a layer (Lc1) of aqueous composition (Cc1) onto the layer (Lb1) of aqueous composition (Cb1), and then the entire ensemble is dried. One suitable coating device is a slide coater. A slide coater forms a liquid composite in which there is a layer (Lb1) of aqueous composition (Cb1) underneath a layer (Lc1) of aqueous composition (Cc1); while keeping those layers intact, the slide coater applies a layer of the entire composite onto a substrate (Sa) in a way that brings layer (Lb1) into contact with substrate (Sa) and leaves layer (Lc1) in contact with air; then the entire article is dried to remove water from the aqueous compositions. Also contemplated are transfer coating methods, for example methods that involve making a coating layer of composition (Cb) on a release liner, then making a coating layer of composition (Cc) on top of the layer of composition (Cb), then contacting the layer of composition (Cc) with substrate (Sa) (preferably under pressure), and then removing the release liner.

In addition to adhesion to polyolefin surfaces, the pressure sensitive adhesive article of the present invention desirably shows other useful characteristics, including, for example a useful degree of adhesion to other types of surfaces and resistance to shear. Also, it is desirable that, when the pressure sensitive adhesive article of the present invention is stored for a time, little or no tackifier migrates from composition (Cc) into composition (Cb).

While the present invention is not bound by any theory, it is contemplated that one reason why acrylic PSAs often have adhesion to polyolefin surfaces that is considered to be poor is that acrylic polymers have many chemical groups on the chain that are relatively polar. It is contemplated that the surface of an acrylic PSA has a relatively high surface energy as a result. In contrast, polyolefin surfaces are comparatively non-polar and are considered to have relatively low surface energy. It is contemplated that this mismatch of surface energy values prevents the acrylic PSA from effectively wetting the surface of the polyolefin (i.e., from making intimate contact on a molecular scale). It is contemplated that the presence of tackifier provides a lower surface energy on the surface of the PSA, thereby improving wetting of polyolefin surface, which it turn improves adhesion to polyolefin surfaces.

It is contemplated that the pressure sensitive adhesive article of the present invention will be put to use by bringing it into contact with an additional substrate (Sd). It is contemplated that pressure will be applied to bring composition (Cc) and substrate (Sd) into intimate contact and then released. It is contemplated that the result will be a bonded article in which the pressure sensitive adhesive article is still intact and in which composition (Cc) is bonded with substrate (Sd). Substrate (Sd) may be any substance. Preferably, Substrate (Sd) is a polyolefin. Preferably, substrate (Sd) has Tg of 50°C or higher.

The following are examples of the present invention.

The materials used in the following examples are as follows.

| **Label** | **Material** | **Description** | **Source** |
|---|---|---|---|
| PSA-L | PSA, low-shear type acrylic aqueous latex polymer | Polymerized Units⁽¹⁾ | |
| | | more than 95%: mixture of BA and EA | |
| | | remainder: other acrylic monomers | |
| PSA-H | PSA, low-shear type acrylic aqueous latex polymer | Polymerized Units⁽¹⁾ | |
| | | more than 95%: mixture of BA and EA | |
| | | remainder: other acrylic monomers | |
| SIS | Kraton™ D1161 P Copolymer | SIS triblock polymer aqueous dispersion | Kraton Performance Polymers |
| T1 | Tacolyn™ 5003 resin | hydrocarbon resin tackifier aqueous dispersion | Eastman Chemical Co. |
| PET | PET film | polyethylene terephthalate film, thickness 50.8 µm | Chemsultants |
| HDPE | HDPE | high density polyethylene | Chemsultants |
| Blend1 | mixture of aqueous dispersions | Solids weight ratio of 45 SIS / 55 T1 | |

The HDPE Peel test was PSTC Test Method 101 (Pressure Sensitive Tape council, Naperville, IL, USA), with test substrate of HDPE, 20 minutes dwell time, at 180°, reported in units of Newtons per 25 mm of width (N/25mm).

The SS Shear test was PSTC Test Method 107 (Pressure Sensitive Tape council, Naperville, IL, USA), with test substrate of stainless steel, test area was 25mm X 25 mm, mass was 1 kg. The results reported are time to failure (the symbol ">" means that the test was stopped prior to failure at the time shown).

Single-layer PSAs were made as follows. A layer of PSA-L was applied to the corona-treated side of PET film. The coating was then dried by placing in a oven for 5 minutes at 80°C. Dry thickness was 22.5 micrometers.

Two-layer PSAs were made as follows. A layer of PSA-L was applied and dried as in the single-layer PSA method. Thickness of the dry first coating was 20.0 micrometers. Then a layer of Blend1 was applied and dried as in the single-layer PSA method. Thickness of the dry second coating was 2.5 micrometers.

### Example 1: Modification of a low-shear adhesive.

The results were as follows.

| **Type** | **HDPE Peel (N/25mm)** | **SS Shear (hours)** |
|---|---|---|
| single layer (comparative) | 3.9 | 4.6 |
| Two-Layer | 5.4 | 5.4 |

The two-layer example of the present invention shows improvements in both peel strength on HDPE and in shear bonding to stainless steel.

### Example 2: Modification of a high-shear adhesive.

Coatings were made as in Example 1 except that in all cases PSA-H was used in place of PSA-L.

The results were as follows.

| **Type** | **HDPE Peel (N/25mm)** | **SS Shear (hours)** |
|---|---|---|
| single layer (comparative) | 1.2 | 58.5 |
| Two-Layer | 2.3 | >77 |

The two-layer example of the present invention shows improvements in both peel strength on HDPE and in shear bonding to stainless steel.

## Claims

1. A pressure sensitive adhesive article comprising
(a) a substrate (Sa);
(b) in contact with said substrate (Sa), a layer (Lb) of a tackifier-free composition (Cb) that comprises one or more acrylic polymer (POLb) having Tg determined by the method described herein of -10°C or lower, said composition (Cb) being tackifier-free as the amount of all tackifiers in the composition is either zero or is less than 10% by weight based on the dry weight of the composition; and
(c) in contact with said layer (Lb), a layer (Lc) of a tackifier-containing composition (Cc) that comprises one or more tackifier and one or more hydrocarbon polymer (POLc) having Tg determined by the method described herein of -10°C;
wherein said acrylic polymer (POLb) is a latex of particles of polymer formed by emulsion polymerization;
said acrylic polymer (POLb) has weight-average molecular weight of 50,000 or higher; and the amount of said tackifier in said article is 12% or less by weight, based on the sum of the weights of said composition (Cb) and said composition (Cc).

2. The article of claim 1, wherein said acrylic polymer (POLb) comprises polymerized units of n-butyl acrylate, iso-octyl acrylate, or a mixture thereof.

3. The article of claim 1, wherein said tackifier is incompatible with said acrylic polymer (POLb).

4. The article of claim 1, wherein said acrylic polymer (POLb) has Tg determined by the method described herein between -10°C and-100°C.

5. A bonded article made by a process comprising contacting a substrate (Sd) with the article of claim 1, wherein said substrate (Sd) is in contact with said layer (Lc).

## Patentansprüche

1. Ein druckempfindlicher Haftklebstoffartikel, der Folgendes beinhaltet:
(a) ein Substrat (Sa);
(b) in Kontakt mit dem Substrat (Sa) eine Schicht (Lb) einer klebrigmacherfreien Zusammensetzung (Cb), die ein oder mehrere Acrylpolymere (POLb) beinhaltet, die eine durch das hier beschriebene Verfahren bestimmte Tg von -10 °C oder weniger aufweisen,
wobei die Zusammensetzung (Cb) frei von Klebrigmachern ist, da die Menge aller Klebrigmacher in der Zusammensetzung entweder null ist oder weniger als 10 Gew.-%, bezogen auf das Trockengewicht der Zusammensetzung; und
(c) in Kontakt mit der Schicht (Lb) eine Schicht (Lc) einer klebrigmacherhaltigen Zusammensetzung (Cc), die einen oder mehrere Klebrigmacher und ein oder mehrere Kohlenwasserstoffpolymere (POLc), die eine durch das hier beschriebene Verfahren bestimmte Tg von -10 °C aufweisen, beinhaltet;
wobei das Acrylpolymer (POLb) eine Dispersion aus Polymerpartikeln, gebildet durch Emulsionspolymerisation, ist;
das Acrylpolymer (POLb) ein Gewichtsmittel der Molmasse von 50 000 oder mehr aufweist;
und die Menge des Klebrigmachers in dem Artikel 12 Gew.-% oder weniger, bezogen auf die Summe der Gewichte der Zusammensetzung (Cb) und der Zusammensetzung (Cc), beträgt.

2. Artikel gemäß Anspruch 1, wobei das Acrylpolymer (POLb) polymerisierte Einheiten von n-Butylacrylat, iso-Octylacrylat oder eine Mischung davon beinhaltet.

3. Artikel gemäß Anspruch 1, wobei der Klebrigmacher mit dem Acrylpolymer (POLb) inkompatibel ist.

4. Artikel gemäß Anspruch 1, wobei das Acrylpolymer (POLb) eine durch das hier beschriebene Verfahren bestimmte Tg von zwischen -10 °C und -100 °C aufweist.

5. Ein gebundener Artikel, hergestellt durch einen Prozess, der das In-Kontakt-Bringen eines Substrats (Sd) mit dem Artikel gemäß Anspruch 1 beinhaltet, wobei das Substrat (Sd) in Kontakt mit der Schicht (Lc) ist.

## Revendications

1. Un article adhésif sensible à la pression comprenant
(a) un substrat (Sa) ;
(b) en contact avec ledit substrat (Sa), une couche (Lb) d'une composition dépourvue d'agent collant (Cb) qui comprend un polymère acrylique (POLb) ou plus ayant une Tg déterminée par la méthode décrite ici de -10 °C ou moins, ladite composition (Cb) étant dépourvue d'agent collant puisque la quantité de tous les agents collants dans la composition est soit de zéro, soit de moins de 10 % en poids rapporté au poids à sec de la composition ; et
(c) en contact avec ladite couche (Lb), une couche (Lc) d'une composition contenant un agent collant (Cc) qui comprend un agent collant ou plus et un polymère hydrocarbure (POLc) ou plus ayant une Tg déterminée par la méthode décrite ici de -10 °C ;
dans lequel ledit polymère acrylique (POLb) est un latex de particules de polymère formé par polymérisation en émulsion ;
ledit polymère acrylique (POLb) a une masse moléculaire moyenne en poids de 50 000 ou plus ;
et la quantité dudit agent collant dans ledit article est de 12 % en poids ou moins, rapporté à la somme des poids de ladite composition (Cb) et de ladite composition (Cc).

2. L'article de la revendication 1, dans lequel ledit polymère acrylique (POLb) comprend des unités polymérisées d'acrylate de n-butyle, d'acrylate d'iso-octyle, ou un mélange de ceux-ci.

3. L'article de la revendication 1, dans lequel ledit agent collant est incompatible avec ledit polymère acrylique (POLb).

4. L'article de la revendication 1, dans lequel ledit polymère acrylique (POLb) a une Tg déterminée par la méthode décrite ici comprise entre -10 °C et -100 °C.

5. Un article collé fabriqué par un procédé comprenant la mise en contact d'un substrat (Sd) avec l'article de la revendication 1, dans lequel ledit substrat (Sd) est en contact avec ladite couche (Lc).
